(19) Europäisches Patentamt
European Patent Office
Office européen des brevets

(11) EP 2 400 460 B1

(12) **FASCICULE DE BREVET EUROPEEN**

(45) Date de publication et mention de la délivrance du brevet:
**03.10.2012 Bulletin 2012/40**

(51) Int Cl.:
***G06T 7/20*** *(2006.01)*

(21) Numéro de dépôt: **11169188.7**

(22) Date de dépôt: **08.06.2011**

(54) **Procédé d'évaluation de la vitesse horizontale d'un drone, notamment d'un drone apte au vol stationnaire autopiloté**

Bewertungsverfahren der horizontalen Geschwindigkeit einer Drohne, insbesondere einer Drohne mit über den Autopiloten gesteuertem stationärem Flug

Method for assessing the horizontal speed of a drone, particularly of a drone capable of hovering on automatic pilot

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2010 FR 1054945**

(43) Date de publication de la demande:
**28.12.2011 Bulletin 2011/52**

(73) Titulaire: **Parrot**
**75010 Paris (FR)**

(72) Inventeur: **Derbanne, Thomas**
**75018 PARIS (FR)**

(74) Mandataire: **Dupuis-Latour, Dominique**
**Bardehle Pagenberg**
**10, boulevard Haussmann**
**75009 Paris (FR)**

(56) Documents cités:
- **IVAÌ N F MONDRAGOÌ N ET AL: "3D pose estimation based on planar object tracking for UAVs control", ROBOTICS AND AUTOMATION (ICRA), 2010 IEEE INTERNATIONAL CONFERENCE ON, IEEE, PISCATAWAY, NJ, USA, 3 mai 2010 (2010-05-03), pages 35-41, XP031743224, ISBN: 978-1-4244-5038-1**
- **ANDREW JOHNSON ET AL: "Design Through Operation of an Image-Based Velocity Estimation System for Mars Landing", INTERNATIONAL JOURNAL OF COMPUTER VISION, KLUWER ACADEMIC PUBLISHERS, BO, vol. 74, no. 3, 17 janvier 2007 (2007-01-17), pages 319-341, XP019534964, ISSN: 1573-1405, DOI: DOI: 10.1007/S11263-006-0022-Z**
- **LARRY MATTHIES ET AL: "Computer Vision on Mars", INTERNATIONAL JOURNAL OF COMPUTER VISION, KLUWER ACADEMIC PUBLISHERS, BO, vol. 75, no. 1, 20 mars 2007 (2007-03-20), pages 67-92, XP019534987, ISSN: 1573-1405, DOI: DOI:10.1007/S11263-007-0046-Z**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 400 460 B1

Printed by Jouve, 75001 PARIS (FR)

## Description

L'invention concerne le pilotage des drones, notamment des drones à voilure tournante tels que les hélicoptères, quadricoptères et analogues.

Un exemple typique d'un tel drone est le *AR.Drone* de Parrot SA, Paris, France, qui est un quadricoptère équipé d'une série de capteurs (accéléromètres et gyromètres trois axes, altimètre). Le drone est également pourvu d'une caméra frontale captant une image de la scène vers laquelle se dirige le drone, ainsi que d'une caméra de visée verticale captant une image du terrain survolé par le drone.

Ce drone peut être piloté par l'utilisateur au moyen d'un dispositif de télécommande déportée reliée au drone par une liaison radio. Il est en outre pourvu d'un système de stabilisation automatique en vol stationnaire, qui permet notamment au drone d'atteindre de manière automatique un point d'équilibre et, lorsque ce point d'équilibre est atteint, d'apporter les corrections nécessaires pour maintenir le point fixe par *trimming,* c'est-à-dire par correction des petites variations de translation dues aux effets externes tels que déplacement d'air et dérive des capteurs. L'altimètre, qui est un télémètre à ultrasons disposé sous le drone, fournit une mesure de la vitesse verticale qui permet d'asservir la force de poussée afin de stabiliser le drone en hauteur. D'autre part, les capteurs inertiels (accéléromètres et gyromètres) permettent de mesurer les vitesses angulaires et les angles d'attitude du drone avec une certaine précision, et peuvent donc être utilisés pour asservir dynamiquement la direction de poussée du drone dans la direction opposée à celle de la gravité.

Pour l'établissement du vol stationnaire, subsiste le problème consistant à annuler la vitesse linéaire du drone. Malheureusement, les accéléromètres à bas coût utilisés sont généralement trop bruités pour donner une estimation satisfaisante de la vitesse du drone après une double intégration du signal.

Le WO 2009/109711 A2 (Parrot) propose d'utiliser à cet effet l'image de la caméra à visée frontale, et d'estimer la vitesse horizontale du drone par analyse de la succession des images captées par cette caméra et identification du déplacement de différents points caractéristiques de l'image. Cette technique se heurte cependant à un manque de précision, notamment pour les vitesses les plus faibles (lorsque le drone se déplace vers l'avant avec une vitesse faible, la scène captée ne présente que très peu de changements d'une image à la suivante). Elle est d'autre part extrêmement dépendante de la présence ou non de points d'intérêt caractéristiques dans la scène captée par la caméra : dans le cas d'une image uniforme, telle qu'un mur ou le ciel en extérieur, la quasi-absence de points caractéristiques rend cette technique inopérante.

La présente invention repose sur l'utilisation de l'image fournie non plus par la caméra à visée frontale, mais par la caméra à visée verticale, pour évaluer la vitesse horizontale du drone.

L'identification du déplacement de différents points de l'image captée par cette caméra reste toutefois une tâche difficile, fortement dépendante à la fois (i) de la nature de la scène (plus ou moins contrastée, plus ou moins changeante), (ii) de la vitesse et (iii) des contraintes de complexité limitée des calculs.

En particulier, si l'on souhaite réaliser un asservissement de stabilisation automatique en vol stationnaire, il convient de disposer d'une mesure de vitesse qui soit à la fois précise, sensible (car les vitesses linéaires autour du point d'équilibre peuvent être très faibles) et disponible en temps réel de manière à disposer d'un asservissement efficace et réactif.

On notera toutefois que l'invention n'est pas limitée à l'évaluation de la vitesse pour la stabilisation en vol stationnaire du drone, mais qu'elle est applicable de façon plus générale dans toutes les configurations de vol du drone, donc même avec des valeurs de déplacement proches de la vitesse maximale de celui-ci (de l'ordre de 5 m/s).

Il existe divers algorithmes permettant d'estimer une vitesse de déplacement d'une scène captée par une caméra vidéo.

Un premier type d'algorithme est l'algorithme dit "à flot optique", dont les bases sont notamment décrites par :

[1] LUCAS B.D. et KANADE T., "An Iterative Image Registration Technique with an Application to Stereo Vision", Proc. DARPA Image Un-derstanding Workshop, pp. 121-130, 1981 et
[2] HORN B.K.P. et SCHUNK B., "Determining Optical Flow", Artificial Intelligence, (17):185-204,1981.

On pourra également se référer à :

[3] MONDRAGÓN I. et al., "3D Pose Estimation Based on Planar Object Tracking for UAVs Control", Proc. IEEE Conf. on Robotics and Automation, pp. 35-41, May 3-8, 2010,

qui décrit une technique multirésolution pour estimer le flot optique avec des résolutions différentes pour piloter l'atterrissage d'un drone.

La méthode à flot optique présente l'avantage de n'imposer que très peu de contraintes sur la scène (peu de contraste, peu de contenu). En outre, par une approche "multirésolution" il est possible d'estimer des vitesses élevées

comme des vitesses faibles. En revanche, cette méthode est sensible aux rotations et aux changements d'attitude, et elle ne permet pas de vérifier intrinsèquement la qualité du résultat délivré, c'est-à-dire que l'algorithme délivre toujours un résultat dès lors que suffisamment de points présentent un gradient élevé, mais ce résultat est délivré même s'il n'a pas de sens.

En résumé, la méthode à flot optique est une méthode "tout-terrain", pouvant fonctionner pour une très large plage de vitesses, mais elle délivre un résultat qui n'est pas toujours fiable, ni très précis notamment pour les faibles vitesses.

Un autre type d'algorithme est celui des algorithmes dits "détecteurs de coins" ou "à détection de point d'intérêt", dont les bases sont exposées par exemple par :

[4] ROSTEN E. et DRUMMOND T., "Fusing Points and Lines for High Performance Tracking", IEEE International Conference on Computer Vision, pp. 1508-1511, 2005, et

[5] ROSTEN E. et DRUMMOND T., "Machine Learning for High-Speed Corner Detection", European Conference on Computer Vision, pp. 430-443, 2006.

L'algorithme détecteur de coins est précis et robuste, il tient compte des rotations et il est susceptible de détecter et d'éliminer des résultats d'évaluation aberrants. De plus, la précision absolue est constante quelle que soit la vitesse (à l'opposé de la méthode à flot optique), ce qui permet d'obtenir d'excellents résultats notamment pour les vitesses faibles, avantage particulièrement appréciable si l'ont veut utiliser ces résultats pour un asservissement et une stabilisation en vol stationnaire.

En revanche, cette méthode impose des contraintes beaucoup plus fortes sur la scène en termes de contraste et de texture, qui ne le rendent pas applicable à toutes les situations susceptibles d'être rencontrées.

Enfin, dans tous les cas, l'utilisation du résultat du calcul pour asservir certaines commandes de pilotage automatique du drone impose de disposer de cette donnée quasiment en temps réel, en tous cas de façon suffisamment rapide pour pouvoir assurer le pilotage automatique du drone avec toute la réactivité recherchée.

Cette contrainte limite les possibilités de mise en oeuvre des algorithmes conventionnels, souvent conçus pour être exécutés sur des ordinateurs munis de processeurs rapides et de capacités mémoire importantes.

L'un des buts de l'invention est de proposer un nouveau procédé qui combine les avantages des deux techniques précitées, flot optique et détection de coins, notamment - mais non exclusivement - dans le cadre d'une détection de vitesse pour un asservissement en vol stationnaire du drone.

Un autre but de l'invention est de pouvoir bénéficier de ces avantages même dans le cas de scènes dont le contraste peut être très faible et le bruit élevé, ou dont les formes identifiées dans l'image peuvent changer d'apparence de façon imprévisible, comme cela est le cas du terrain très changeant et imprévisible survolé par un drone.

Un autre but encore de l'invention est de proposer un procédé de mesure de la vitesse horizontale qui puisse être implémenté de manière à délivrer une mesure en temps réel de la vitesse au moyen d'un calculateur embarqué incorporé au drone, donc disposant de possibilités limitées en termes de puissance de calcul.

L'invention propose à cet effet un procédé d'évaluation de la vitesse de translation horizontale d'un drone comprenant un altimètre apte à mesurer l'altitude du drone par rapport au terrain survolé par ce drone, et une caméra vidéo à visée verticale pointant vers le bas et apte à capter des images numériques successives d'une scène du terrain.

Ce procédé opère par estimation du déplacement de la scène captée par la caméra d'une image à la suivante, et application à ce déplacement estimé d'un facteur d'échelle fonction de l'altitude mesurée.

L'estimation du déplacement comprend, d'une manière en elle-même connue : la mise à jour périodique et continue d'une représentation multi-résolution de type pyramide d'images, modélisant à différentes résolutions successivement décroissantes une même image captée de la scène ; et, pour chaque nouvelle image captée, l'application à cette représentation multi-résolution d'un algorithme itératif de type flot optique d'estimation du mouvement différentiel de la scène d'une image à la suivante,

De façon caractéristique de l'invention, le procédé comprend en outre:

l'obtention, à partir des données produites par l'algorithme à flot optique, d'au moins un paramètre de texturation représentatif du niveau des micro-contrastes de la scène captée ; l'obtention d'une approximée de la vitesse de translation horizontale du drone ; l'application au(x) paramètre(s) de texturation et à l'approximée de vitesse d'une première batterie de critères prédéterminés ; et, si cette première batterie de critères est vérifiée, le basculement de l'algorithme à flot optique vers une algorithme de type détecteur de coins pour l'estimation du mouvement différentiel de la scène d'une image à la suivante. Le paramètre de texturation est un paramètre dérivé de la matrice

$$\begin{bmatrix} \sum_E I_x^2 & \sum_E I_x I_y \\ \sum_E I_x I_y & \sum_E I_y^2 \end{bmatrix}$$

des composantes du gra-dient de l'image, où $I_x$, et $I_y$ sont les composantes du gradient de l'image, et E est l'ensemble des points pour lesquels le gradient présente une norme supérieure à un premier seuil utile prédéterminé.

Le(s) paramètre(s) de texturation peu(ven)t notamment être la valeur de la trace de cette matrice, et le cardinal de l'ensemble E des points pour lesquels le gradient présente une norme supérieure à un premier seuil utile prédéterminé.
La première batterie de critères prédéterminés pour décider le basculement de l'algorithme à flot optique vers l'algorithme détecteur de coins peut en particulier comprend cumulativement les conditions suivantes : valeur de la trace supérieure à un deuxième seuil donné ; et valeur du cardinal supérieur à un troisième seuil donné ; et estimée de la vitesse inférieure à un quatrième seuil donné.
Si l'algorithme sélectionné est l'algorithme détecteur de coins et si l'approximée de la vitesse est inférieure à un cinquième seuil, il est avantageusement prévu en outre une adaptation de l'algorithme détecteur de coins par modification, pour au moins certains trackers sélectionnés, des paramètres de recherche du tracker et des dimensions de la zone de recherche dans l'image dans un sens restrictif. Il est en outre avantageusement prévu d'activer dans ce cas un mode autopiloté d'asservissement en position du drone.
Selon un second aspect de l'invention, le procédé comprend également, après basculement vers l'algorithme détecteur de coins : l'obtention, à partir des données produites par l'algorithme détecteur de coins, d'au moins un paramètre de risque d'échec de l'estimation du mouvement différentiel de la scène d'une image à la suivante par l'algorithme détecteur de coins ; l'obtention d'une approximée de la vitesse de translation horizontale du drone ; l'application au(x) paramètre(s) de risque d'échec et à l'approximée de vitesse d'une seconde batterie de critères prédéterminés ; et, si la seconde batterie de critères est vérifiée, basculement inverse avec retour à l'algorithme à flot optique pour l'estimation du mouvement différentiel de la scène d'une image à la suivante. Le paramètre de risque d'échec peut notamment comprendre le nombre de trackers verrouillés utilisés par l'algorithme détecteur de coins.
La seconde batterie de critères prédéterminés pour décider le basculement inverse avec retour vers l'algorithme à flot optique peut en particulier comprendre alternativement les conditions suivantes : nombre de trackers verrouillés inférieur à un sixième seuil donné ; ou estimée de la vitesse supérieure à un septième seuil donné.
Enfin, le procédé peut prévoir le comptage du nombre d'images successives captées depuis le basculement d'un premier algorithme, algorithme à flot optique ou algorithme détecteur de coins, vers l'autre algorithme, et le conditionnement du retour au premier algorithme à un nombre minimal d'images comptées depuis le basculement vers cet autre algorithme.
On va maintenant décrire un exemple de mise en oeuvre de l'invention, en référence aux dessins annexés.

La Figure 1 est une vue d'ensemble montrant le drone et l'appareil de télécommande associé permettant son pilotage à distance.
La Figure 2 est une représentation schématique d'une pyramide d'images, c'est-à-dire d'une représentation multirésolution de la scène captée par la caméra à visée verticale.
La Figure 3 est un organigramme général des différentes étapes d'un algorithme de type à flot optique.
La Figure 4 est un organigramme général des différentes étapes d'un algorithme détecteur de coins.
La Figure 5 illustre les étapes essentielles de l'algorithme de sélection de l'estimateur (flot optique ou détecteur de coins) selon l'invention, en fonction d'un certain nombre de critères de basculement d'un algorithme vers l'autre.

On va maintenant décrire un exemple de mise en oeuvre de l'invention.
Sur la Figure 1, la référence 10 désigne de façon générale un drone, qui est par exemple un quadricoptère tel que le modèle *AR.Drone* de Parrot SA, Paris, France. Ce drone 10 comporte quatre rotors coplanaires 12 dont les moteurs sont pilotés indépendamment par un système intégré de navigation et de contrôle d'attitude.
Le drone 10 comporte également une première caméra 14 à visée frontale permettant d'obtenir une image de la scène vers laquelle se dirige le drone, ainsi qu'une seconde caméra 16 à visée verticale pointant vers le bas, apte à capter des images numériques successives du terrain 18 survolé par le drone. L'angle de vue de cette caméra, schématisé en 20, est par exemple de 64° de diagonale, avec une résolution de 176 x 144 pixels (ces valeurs n'étant bien entendu données qu'à titre illustratif).
Le drone 10 est également pourvu d'un altimètre à ultrasons 22, émettant en direction du sol un faisceau 24 permettant de connaître à tout moment l'altitude du drone par rapport au sol. Cette information servira notamment à estimer un facteur d'échelle à appliquer à l'image captée par la caméra 16, de manière à pouvoir transformer le déplacement de la scène sur l'image captée en une information de vitesse par rapport au terrain 18. Enfin, le drone comporte des capteurs inertiels (accéléromètres et gyromètres) permettent de mesurer les vitesses angulaires et les angles d'attitude du drone avec une certaine précision.

Le drone 10 peut être piloté par un appareil de télécommande distant 26, par exemple un appareil pourvu d'un écran tactile 28 affichant l'image embarquée par la caméra frontale 14, avec en superposition un certain nombre de symboles permettant l'activation de commandes de pilotage par simple contact du doigt 30 d'un utilisateur sur l'écran tactile 28. L'appareil de télécommande 26 est également pourvu de capteurs d'inclinaison permettant de contrôler l'attitude du drone par des inclinaisons correspondantes de l'appareil de télécommande selon des axes de roulis et de tangage.

Le drone est également pourvu d'un système de stabilisation autonome en vol stationnaire en l'absence de toute commande extérieure appliquée par un utilisateur.

Ce système permet d'apporter les corrections nécessaires pour maintenir l'équilibre du point fixe par des commandes de *trimming* appropriées, c'est-à-dire des commandes de correction des minimes variations de translation dues aux effets externes tels que déplacements d'air et dérive des capteurs.

Pour pouvoir fonctionner, ce système de stabilisation automatique nécessite une information de vitesse, notamment de la vitesse de translation linéaire horizontale du drone.

L'invention propose d'utiliser la caméra vidéo à visée verticale 22 dont est pourvu le drone pour déduire la direction et l'amplitude de cette vitesse linéaire à partir du mouvement de formes détectées et suivies entre les images successives, en fonction des transformations de l'image de la scène captée par cette caméra.

On formulera les hypothèses suivantes:

- en premier lieu, on supposera que la scène est une scène "plate", c'est-à-dire que le terrain 18 est horizontal. En effet, le télémètre embarqué fournit une mesure de la distance du drone à la scène (terrain 18), mais la technologie utilisée (ultrasons) ne permet pas de déterminer en quel point précis de l'image cette distance a été évaluée. On supposera donc que l'altitude varie peu dans la scène par rapport à la donnée du télémètre, et on considérera que tout point de la scène se situe à une même distance du plan focal de l'image, en négligeant l'influence de la profondeur de la scène. Concrètement, cette hypothèse est généralement correcte si la caméra et son télémètre sont orientés face au sol ;
- en second lieu, on supposera que l'illumination de la scène, et implicitement la réponse de la caméra, sont constantes ;
- enfin, on supposera que la scène observée est rigide, afin de limiter les difficultés de l'estimation de vitesse à partir d'une suite d'images.

*Algorithme à base de flot optique constant*

On va décrire les caractéristiques principales de ce type d'algorithme, qui est en lui-même connu, notamment d'après les publications [1] et [2] indiquées plus haut, auxquelles on pourra se référer pour plus de détails.

On peut notamment utiliser la méthode d'estimation de Lucas-Kanade, qui est particulièrement simple et rapide, dès lors que l'on est en présence d'un flot optique localement constant, c'est-à-dire dont le mouvement est le même pour chaque point de la scène captée par la caméra (hypothèse qui est vérifiée si la scène est parfaitement plane, si le mouvement est parallèle au plan focal de la caméra et sans rotation autour de l'axe optique, et avec une illumination constante de la scène).

L'inconvénient de cette méthode est qu'elle repose sur une approximation de Taylor du signal image, ce qui réduit à quelques pixels seulement la vitesse maximale détectable de façon fiable.

Pour pallier cet inconvénient, on peut augmenter la vitesse maximale théorique détectable par une approche multirésolution, en créant une série de réductions successives de l'image originelle. Cette approche, également dénommée "pyramide d'images" est schématisée Figure 2 : à partir de l'image complète (niveau 0), de résolution 176 x 144 pixels dans cet exemple, on reprend la même image à des réductions successives d'un facteur de 2 : niveau 1 sur 88 x 72 pixels, niveau 2 sur 44 x 36 pixels et niveau 3 sur 22 x 18 pixels.

La précision du flot optique estimé sera inversement proportionnelle à la réduction effectuée, en revanche la vitesse maximale détectable correspondante augmente proportionnellement avec le niveau de réduction. L'approche multirésolution consiste à estimer le flot optique constant dans la plus basse résolution (ici, le niveau 3) puis à réinjecter ce résultat en tant que prédiction à la résolution suivante (niveau 2). L'avantage de travailler sur une version grossière de l'image (par exemple le niveau 3) réside dans le fait qu'on n'autorise qu'un très petit déplacement dans l'image et que le suivi des points est alors très rapide. On peut alors utiliser l'information de mouvement ainsi obtenue pour prédire le mouvement sur l'image de niveau inférieur. On progresse ainsi de niveau en niveau jusqu'à arriver à une précision suffisante. Concrètement, il suffit de commencer l'estimation au niveau 3 (trois réductions successives) et finir au niveau 1 (une réduction), ce qui permet extrêmement rapidement d'obtenir un résultat précis. L'abandon du niveau 0 (image

complète) permet d'économiser environ 75 % des calculs, ce qui assure un compromis efficace entre temps de calcul et précision du résultat.

La prédiction utilisée au niveau le plus bas (ici le niveau 1) sera la dernière vitesse estimée, remise à l'échelle de cette résolution.

Comme une erreur à basse résolution se traduit par une erreur plus élevée lorsque la résolution augmente, il convient de tester la vraisemblance de chaque prédiction, en vérifiant que les estimations successives sont dans la même direction que l'estimation passée et qu'un signal lissé, quand elles sont plus grandes qu'un certain seuil. Ce signal lissé est obtenu par un lissage exponentiel des déplacements de la caméra ; il est également atténué afin de tendre vers zéro s'il n'est pas mis à jour pendant une durée suffisante en cas d'échec de l'estimation de vitesse ; dans le cas contraire, ce signal deviendrait lui-même aberrant.

La Figure 3 résume sous forme d'organigramme les différentes étapes mises en oeuvre par l'algorithme de flot optique que l'on vient d'exposer.

Après avoir estimé le flot optique constant ($F_x$, $F_y$) par application de cet algorithme, pour en déduire une estimation du déplacement entre deux images il suffit d'un changement de repère (pour se placer dans un repère autre que le repère propre de la caméra) et d'un changement d'échelle (faisant intervenir la focale *Focale* de la caméra et la distance *Altitude à* la scène) :

$$\begin{bmatrix} T_x \\ T_y \\ T_z \end{bmatrix} = \frac{Altitude}{Focale} R_{image/scène} \cdot \begin{bmatrix} F_x \\ F_y \\ 0 \end{bmatrix}$$

Il convient également de compenser une rotation éventuelle entre les images utilisées pour estimer le flot optique. Ces informations de rotation sont délivrées par la centrale inertielle, et les erreurs qu'elles sont susceptibles d'introduire (rotations qui ajoutent une composante le long de l'intersection entre le plan image et le plan perpendiculaire à l'axe de rotation) peuvent être compensées en ajoutant au flot estimé le déplacement du centre optique dû à la rotation entre les deux images :

$$\vec{F}_{final} = \begin{bmatrix} F_x \\ F_y \end{bmatrix} + G \cdot \left( proj\left( R_{rotation} \cdot \begin{bmatrix} C_x \\ C_y \\ Focale \end{bmatrix} \right) - \begin{bmatrix} C_x \\ C_y \end{bmatrix} \right)$$

$R_{rotation}$ étant la rotation à compenser,
*proj* étant la fonction qui projette un point de l'espace sur l'écran,
($C_x$, $C_y$) étant le centre de l'image, et
*G* étant le gain de la compensation.

La compensation peut être optimisée en calculant un gain G optimal sur une très grande base. Le gain optimal obtenu, inférieur à l'unité, ne sera optimal qu'en moyenne, le gain idéal pour les translations nulles étant égal à l'unité. Il peut être donc plus efficace de conserver le gain unité pour une situation de vitesse nulle (asservissement de point fixe en vol stationnaire).

La compensation de rotation permet de rendre le calcul robuste aux rotations rencontrées en vol stationnaire, et surtout de conserver un modèle linéaire de mouvement qui permette d'appliquer la prédiction de façon quasi-transparente en termes de calcul (le décalage de l'image entière revenant à décaler un pointeur).

*Algorithme à base de détection de coins*

On va décrire les caractéristiques principales de ce type d'algorithme, qui est en lui-même connu, notamment d'après les publications [3] et [4] indiquées plus haut, auxquelles on pourra se référer pour plus de détails. Cet algorithme opère par estimation du mouvement de différents points d'intérêt ("coins") dans l'image. Il utilise à cet effet une structure dite "tracker" en charge de suivre un point d'intérêt, qui héberge les informations nécessaires pour retrouver ce dernier dans l'image suivante. Lorsqu'un tracker parvient à suivre un point d'une image à la suivante, on dira qu'il est "verrouillé",

dans le cas contraire il est "perdu".

Une première analyse de l'image permet de détecter les points d'intérêt, par exemple au moyen d'un détecteur de coins de type FAST (*Feature from Accelerated Segment Test*). L'algorithme place ensuite des trackers sur ces coins après avoir vérifié que leur contenu est valide, ou cherche la nouvelle position d'un tracker sur l'un de ces points, l'hypothèse étant qu'un point d'intérêt sur une image reste souvent un point d'intérêt sur les images suivantes. La zone de recherche d'un tracker dans une nouvelle image est donc restreinte à la liste des positions d'intérêt. Elle est également restreinte en fonction des mouvements précédents du tracker, par soucis d'optimisation du temps de calcul et de robustesse.

Le détecteur de coins FAST est optimisé pour réduire le nombre d'accès mémoire, avec un seuil de contraste fixe et un rayon de parcours fixe, et une acquisition sur une version de l'image réduite à 50 %. Les positions répondant au détecteur sont stockées dans une table, et marquées sur une image. La table permet d'accéder rapidement aux coins sans contrainte sur la position de ceux-ci (pour le placement des nouveaux trackers), et l'image permet d'y accéder de façon aléatoire (pour la recherche d'un tracker placé).

L'étape suivante consiste à prédire la position future du tracker, par un double lissage exponentiel. Quand le tracker est très lent, sa position prédite sera identifiée à sa position courante. Le rectangle de recherche du tracker changera de taille en fonction de la distance entre la position prédite et la position réelle à l'image précédente. Le rayon de recherche est réduit quand il est trop grand, et il est augmenté quand il est trop proche de la distance réelle (le rayon maximum étant utilisé à chaque nouveau tracker placé).

Lorsqu'un tracker est placé sur une image, on enregistre une fraction d'image ou "patch" de taille fixe (7 x 7 pixels par exemple) autour de sa position, et c'est cette fraction d'image que l'on recherchera dans les images suivantes. La distance utilisée pour comparer différentes fractions d'image est la somme des différences absolues :

$$distance(tracker, I_t, (x,y)) = \sum_{(u,v)\in[-3,+3]^2} \left| tracker \rightarrow patch(u,v) - I_t(x+u, y+v) \right|$$

Pour rechercher un tracker, on parcourt en spirale les positions autour de la position prédite et pour chaque coin on calcule la distance au descripteur, qui est comparée à trois seuils :

- un seuil haut, en dessous duquel on autorise le test des voisins de la position en cours, en 8-connexité, même si ce ne sont pas des positions d'intérêt ;
- un seuil bas, en dessous duquel on arrête la recherche après une recherche au demi-pixel; et
- un seuil moyen, qui autorise une recherche au demi-pixel afin de passer le seuil bas.

Le détecteur de coins ne répondant pas seulement à de véritables coins dans l'image, il se peut que des positions non désirables soient parfois classées comme étant intéressantes.

Ces positions non désirables sont celles autour desquelles la somme des différences absolues est quasiment constante et bruitée au lieu de présenter un minimum très marqué, comme pour un véritable coin. On imposera donc un contraste minimum, puis on pratiquera un test sur chaque fraction d'image envisagée comme descripteur. La fraction d'image binarisée permettra de déterminer par le test si le contenu est monodimensionnel, et de rejeter ou d'accepter la fraction d'image analysée.

La Figure 4 résume sous forme d'organigramme les différentes étapes mises en oeuvre par l'algorithme détecteur de coins que l'on vient d'exposer.

Une fois ces opérations effectuées, il peut être intéressant, dans le cadre d'une estimation de vitesse destinée à un asservissement en point fixe, de modifier la détection des coins pour l'adapter aux très faibles vitesses, de la manière que l'on va décrire, et qui sera désignée "mode gold".

En effet, lorsque la vitesse est faible, l'estimation est plus bruitée ; la précision des trackers reste limitée au demi-pixel, et l'erreur en vitesse augmente donc avec l'altitude. Il peut être alors préférable d'asservir la position de la caméra à une position fixe plutôt que d'annuler la vitesse.

En d'autres termes, pour éviter les dérives (accumulation d'erreurs, vent, etc.) on préfère asservir le drone en position plutôt qu'en vitesse, de manière que cet asservissement soit indépendant de la valeur de la vitesse (valeur elle-même très faible).

Pour assurer un asservissement par rapport à une position, comme les trackers n'ont pas de mémoire (il n'est pas possible de retrouver un tracker perdu), il est nécessaire de s'appuyer sur des trackers présentant une durée de vie longue. Lorsque la vitesse de la caméra est faible, on peut donc faire passer certains trackers dans un mode spécial les rendant plus durables. L'algorithme utilisé sera certes plus complexe, mais cette complexité sera compensée par

une zone de recherche plus réduite.

On met en oeuvre pour cela une recherche exhaustive par le tracker sur un rayon limité, suivie d'une recherche au demi-pixel. On applique de plus un filtrage passe-bas sur la fraction d'image de référence du tracker, ainsi que sur les fractions d'image avec lesquelles ce tracker va être comparé, ceci de manière à augmenter la robustesse aux phénomènes parasites d'échantillonnage tels que l'*aliasing* (repli de spectre) et le moiré.

Pour passer au mode "gold", il faut que la quantité de mouvement moyenne des trackers soit inférieure à un seuil donné, les trackers verrouillés depuis un nombre minimal d'images étant alors changés en trackers "gold", en favorisant les trackers centraux.

Quand un tracker au moins passe en mode "gold", on estimera une translation supplémentaire, qui ne sera pas convertie en une vitesse. L'asservissement visera alors à ramener la caméra à la position visée lors de l'établissement du mode "gold" au lieu de compenser les derniers déplacements. On tentera régulièrement d'ajouter des trackers "gold", même si l'ajout de trackers implique la mise à jour de la position de référence avec la position en cours.

L'étape finale de l'évaluation de la vitesse par l'algorithme détecteur de coins consiste à estimer la translation d'une image à la suivante. L'algorithme de *tracking* fournissant les déplacements à l'image de plusieurs points de la scène, dès lors que l'on suppose que la scène est plane (ce qui est une hypothèse raisonnable puisque la caméra fait face au sol) il ne manque que l'information de profondeur pour ces points.

Le déplacement de la caméra est déduit du mouvement des trackers en minimisant la somme des erreurs de reprojection aux moindres carrés itérativement repondérés (les erreurs de reprojection étant les distances entre les positions trouvées dans l'image la plus récente et la position théorique après le déplacement de la caméra).

Plutôt que d'estimer la vitesse instantanée, on peut aussi estimer le déplacement entre les instants d'acquisition de la dernière image et d'une image plus ancienne, dès lors que la quantité de mouvement des trackers est supérieure à un seuil. Ceci a pour effet de diminuer le nombre de trackers disponibles pour le calcul, mais réduit en proportion l'importance du bruit sur le positionnement des trackers, tout en lissant la valeur de la vitesse finalement estimée.

*Sélection de l'algorithme le mieux adapté*

Comme on l'a exposé en introduction, chacun des deux algorithmes, flot optique et détecteur de coins, présente ses propres avantages et inconvénients.

L'originalité de la présente invention consiste à utiliser ces deux algorithmes de manière alternative, en choisissant celui qui, à un moment donné, est le mieux adapté aux différentes contraintes (vitesse faible ou élevée, scène plus ou moins contrastée et texturée, etc.).

À chaque nouvelle image traitée, on se posera la question du changement d'algorithme pour la prochaine image, en déterminant celui des algorithmes qui, *a priori,* donnera les meilleurs résultats.

Cependant, l'alternance ne se fait pas sans un coût supplémentaire en termes de temps de calcul, et il est important de déterminer également si en cas de changement le nouvel algorithme pourra fonctionner de manière optimale dès le premier couple d'images successives fourni.

On a vu que chacun des deux algorithmes nécessite une phase de prétraitement, appliquée en début de chaîne, et une phase de mise à jour, en fin de chaîne. Ainsi :

- l'algorithme à base de flot optique crée une pyramide d'images à partir de chaque capture de la caméra, et en fin de traitement met à jour l'ancienne version de cette pyramide d'images ;
- l'algorithme détecteur de coins, quant à lui, nécessite comme prétraitement l'acquisition des coins dans une version réduite de l'image, et comme mise à jour le replacement des trackers sur des coins avant l'image suivante.

L'algorithme détecteur de coins ne peut donc pas fonctionner si des coins n'ont pas déjà été acquis à l'image précédente : sans coin, aucun tracker ne pourra être placé, et donc aucun tracker ne pourra être suivi à l'image d'après. Et conserver des trackers anciens n'est pas envisageable, car cela impliquerait de les rechercher dans une zone d'image trop étendue, et qui a pu également entre temps subir des rotations.

Or l'acquisition des coins, même sur une image réduite, est une opération coûteuse en temps de calcul, dont on doit pouvoir se dispenser si elle n'est pas utile, c'est-à-dire si on considère que c'est l'algorithme de flot optique qui est le mieux adapté.

On notera en revanche que les prétraitements de l'algorithme de flot optique sont rapides, et que les mises à jour sont très économes en temps de calcul puisqu'elles peuvent s'effectuer au moyen de simples échanges de pointeurs. La première réduction d'image (passage du niveau 0 au niveau 1), bénéficie de plus aux deux algorithmes, et elle n'est donc jamais inutile.

On choisira donc d'exécuter systématiquement les prétraitements et mises à jour de l'algorithme de flot optique, mais en revanche de n'exécuter ceux de l'algorithme détecteur de coins que dans le cas où ce dernier est le mieux adapté, notamment dans le cas où la vitesse est faible.

Par ailleurs, l'algorithme employé par défaut sera le flot optique, puisque c'est celui qui s'adapte le mieux à tous les types de scènes.

Enfin, on attribuera à chaque algorithme à un "crédit", c'est-à-dire un nombre d'images minimal, après basculement d'un algorithme vers un autre, avant lequel on interdira tout basculement inverse vers le premier algorithme. Ce crédit sera typiquement de 10 images pour conditionner un basculement du flot optique vers le détecteur de coins, mais de quelques images seulement pour le basculement inverse (pour que le prétraitement d'acquisition des coins, relativement long, ne retarde pas trop le calcul de la vitesse).

On va maintenant décrire, en référence à la Figure 5, l'algorithme de sélection de l'algorithme estimateur le mieux adapté.

Comme on l'a indiqué plus haut, la création de la pyramide d'images et sa mise à jour sont effectuées de façon systématique, à chaque nouvelle image (bloc 100). Si un nombre minimal d'images se sont écoulées (crédit épuisé, test 102) et si l'algorithme sélectionné est le flot optique (test 104), la problématique est alors celle de la transition du flot optique vers le détecteur de coins. Il convient pour cela de déterminer si la scène et le mouvement sont adaptés au détecteur de coins.

L'algorithme de flot optique (bloc 106) connaît déjà une version de la vitesse estimée, utilisée pour les prédictions et les tests de cohérence. Cette donnée est une bonne indication de la tendance, rapide ou lente, du mouvement. Elle est robuste aux erreurs grossières de l'algorithme et pourra même être réinjectée comme prédiction pour l'algorithme détecteur de coins.

En variante ou en complément, cette estimée de la vitesse peut être obtenue à partir d'informations fournies par la centrale inertielle.

Comme on l'a indiqué plus haut, seul l'algorithme détecteur de coins nécessite un contenu particulier pour fonctionner.

L'implémentation d'un estimateur de contenu de scène serait toutefois difficile et représenterait un surcoût en termes de complexité, s'il fallait l'utiliser uniquement pour évaluer l'intérêt de basculer de l'algorithme à flot optique vers l'algorithme à détecteur de coins.

On utilise plutôt un "sous-produit" de la méthode d'estimation du flot optique. Cette méthode implique en effet le calcul à chaque image de la formule de Lucas-Kanade :

$$\begin{bmatrix} F_x \\ F_y \end{bmatrix} = \begin{bmatrix} \sum_E I_x^2 & \sum_E I_x I_y \\ \sum_E I_x I_y & \sum_E I_y^2 \end{bmatrix}^{-1} \cdot \begin{bmatrix} \sum_E I_x I_t \\ \sum_E I_y I_t \end{bmatrix}$$

$I_x$ et $I_y$ étant les composantes du gradient de l'image, et
E étant l'ensemble des points pour lesquels le gradient présente une
norme supérieure à un premier utile prédéterminé.

Dans cette formule, la matrice carrée centrale à inverser :

$$\begin{bmatrix} \sum_E I_x^2 & \sum_E I_x I_y \\ \sum_E I_x I_y & \sum_E I_y^2 \end{bmatrix}$$

qui est la matrice des composantes du gradient de l'image, est calculée en tout état de cause.

On notera que, dans la mesure où l'on fonctionne dans des conditions où le résultat est constant sur toute l'image, la matrice rassemble des informations sur les gradients de toute l'image, et c'est pour cette raison que c'est elle que l'on examine.

On va utiliser la valeur de la trace de cette matrice, qui donnera une estimation de la norme moyenne du gradient sur E.

Si E contient suffisamment de points (c'est-à-dire si son cardinal est supérieur à un seuil donné) et que la valeur de cette trace est suffisamment élevée, alors on a une bonne indication que la scène captée est texturée, c'est-à-dire qu'elle contient suffisamment de micro-contrastes pour une mise en oeuvre satisfaisante de l'algorithme.

Les seuils de décision seront ajustés sera choisi en fonction du seuil de contraste utilisé dans le détecteur de coins.

Mathématiquement, il n'est pas certain qu'un fort gradient moyen garantisse la présence de coins, mais statistiquement l'indicateur fonctionne efficacement et surtout n'implique aucun calcul supplémentaire.

Cet "indicateur de texture" de la scène n'étant pas à lui seul une mesure d'une qualité de scène qui puisse garantir un nombre suffisant de trackers en cas d'utilisation du détecteur de coins, il est nécessaire de le combiner avec d'autres paramètres.

On choisira comme paramètre représentatifs :

- le nombre de points (cardinal de E) utilisé pour l'indicateur de texture, qui indique si la zone d'intérêt est bien répartie dans l'image, et
- l'estimée de la vitesse (la vitesse donnée par le signal lissé, moyennée sur plusieurs images), qui permet de savoir si l'on va "globalement vite" ou "globalement lentement".

Ainsi, si les trois conditions suivantes sont cumulativement réunies (test 108) :

- score de l'indicateur de texture (trace de la matrice) supérieur à un premier seuil, et
- nombre de points utilisé (cardinal de E) supérieur à un deuxième seuil, et
- estimée de vitesse inférieure à un troisième seuil donné,

alors on décidera de basculer (bloc 110) vers l'algorithme détecteur de coins.

Le traitement de l'image courante s'achève par la mise à jour de la pyramide d'images, qui est comme on l'a indiqué plus haut (bloc 112) opéré de façon systématique.

On va maintenant se placer dans l'hypothèse où l'algorithme courant sélectionné est le détecteur de coins (bloc 114).

La question est alors de savoir s'il est préférable de revenir à l'algorithme à flot optique, ou bien de rester avec algorithme détecteur de coins et, dans ce dernier cas, s'il convient ou non d'activer le mode "gold" expliqué plus haut pour certains trackers.

Dans la mesure où l'algorithme détecteur de coins ne fait pas usage de la formule de Lucas-Kanade, on ne dispose plus de l'indicateur de texturation de la scène que l'on avait utilisé lorsqu'on était avec l'algorithme de flot optique.

On peut cependant se baser sur le fonctionnement de l'algorithme détecteur de coins pour déterminer s'il est toujours apte à traiter l'image courante.

Le nombre de trackers verrouillés en fin de traitement n'est pas un indicateur de la qualité de l'estimation de la translation (et donc de l'évaluation de la vitesse) : il est possible en effet d'obtenir une mauvaise estimation avec beaucoup de trackers, ou une excellente estimation avec un unique tracker. De la même manière, le score de similarité obtenu par un tracker avec la zone d'image sur laquelle il est déplacé n'est pas lié à l'erreur de placement. Ce n'est qu'en multipliant le nombre de trackers qu'on pourra garantir, en moyenne, un résultat satisfaisant.

Le nombre de trackers verrouillés fournit donc un indicateur du risque que l'algorithme détecteur de coins échoue à long terme, situation que l'on pourra éviter en basculant directement vers l'algorithme à flot optique (qui n'échoue quasiment jamais, au prix d'une légère augmentation d'erreur). On repassera donc à l'algorithme à flot optique si l'une ou l'autre des deux conditions suivantes est remplie (test 116) :

- l'estimée de la vitesse lissée est supérieure à un seuil donné, ou
- le nombre de trackers verrouillés est inférieur à un autre seuil donné. Si l'une ou l'autre de ces conditions est vérifiée, on commandera le basculement inverse (bloc 118) vers l'algorithme à flot optique.

Le traitement de l'image s'achèvera, comme précédemment, par la mise à jour de la pyramide d'images (bloc 112), opérée systématiquement quel que soit le type d'algorithme courant.

Si, au test 116, on avait considéré que l'algorithme détecteur de coins devait être maintenu, alors on vérifie si le mode "gold" est activé (test 120) :

- dans l'affirmative, la situation qui prévaut est conservée, avec l'algorithme détecteur de coins maintenu en l'état (bloc 110) ;
- dans la négative, on estime (test 122) la quantité de mouvement moyenne des trackers, et si celle-ci est inférieure à un seuil donné (i) les trackers verrouillés depuis un nombre minimal d'images seront alors passés en mode "gold", (ii) les positions de référence seront enregistrées et (iii) l'algorithme sera maintenu en mode détecteur de coins (bloc 124).

Ici encore, le traitement de l'image s'achève par la mise à jour de la pyramide d'images (bloc 112).

## Revendications

1. Un procédé d'évaluation de la vitesse de translation horizontale d'un drone (10), notamment d'un drone à voilure tournante apte au vol stationnaire autopiloté, ce drone comprenant :

    - un altimètre (22), apte à mesurer l'altitude du drone par rapport au terrain (18) survolé par ce drone ; et
    - une caméra vidéo à visée verticale (16), pointant vers le bas et apte à capter des images numériques successives d'une scène dudit terrain,

    ledit procédé comprenant l'estimation du déplacement de la scène captée par la caméra d'une image à la suivante, et l'application à ce déplacement estimé d'un facteur d'échelle fonction de l'altitude mesurée,
    l'estimation du déplacement comprenant :

    - la mise à jour périodique et continue d'une représentation multi-résolution de type pyramide d'images, modélisant à différentes résolutions successivement décroissantes une même image captée de la scène ; et
    - pour chaque nouvelle image captée, l'application à ladite représentation multi-résolution d'un algorithme itératif de type flot optique d'estimation du mouvement différentiel de la scène d'une image à la suivante,

    procédé **caractérisé en ce qu'**il comprend en outre :

    - l'obtention, à partir des données produites par l'algorithme à flot optique (106), d'au moins un paramètre de texturation représentatif du niveau des micro-contrastes de la scène captée et dérivé de la matrice

    $$\begin{bmatrix} \sum_E I_x^2 & \sum_E I_x I_y \\ \sum_E I_x I_y & \sum_E I_y^2 \end{bmatrix}$$

    des composantes du gradient de l'image, où $I_x$ et $I_y$ sont les composantes du gradient de l'image et $E$ est l'ensemble des points pour lesquels le gradient présente une norme supérieure à un premier seuil utile prédéterminé ;
    - l'obtention d'une approximée de la vitesse de translation horizontale du drone ;
    - l'application au(x)dit(s) paramètre(s) de texturation et à ladite approximée de vitesse d'une première batterie de critères prédéterminés (108) ; et
    - si ladite première batterie de critères est vérifiée, le basculement (110) de l'algorithme à flot optique vers une algorithme de type détecteur de coins pour l'estimation du mouvement différentiel de la scène d'une image à la suivante.

2. Le procédé de la revendication 1, dans lequel ledit au moins un paramètre de texturation est la valeur de la trace de ladite matrice des composantes du gradient de l'image.

3. Le procédé de la revendication 1, dans lequel ledit au moins un paramètre de texturation est le cardinal dudit ensemble *E* des points pour lesquels le gradient présente une norme supérieure à un premier seuil utile prédéterminé.

4. Le procédé des revendications 2 et 3 prise en combinaison, dans lequel ladite première batterie de critères prédéterminés (108) pour décider le basculement de l'algorithme à flot optique vers l'algorithme détecteur de coins comprend cumulativement les conditions suivantes :

    - valeur de ladite trace supérieure à un deuxième seuil donné ; et
    - valeur dudit cardinal supérieur à un troisième seuil donné ; et
    - estimée de la vitesse inférieure à un quatrième seuil donné.

5. Le procédé de la revendication 1, dans lequel si l'algorithme sélectionné est l'algorithme détecteur de coins et si l'approximée de la vitesse est inférieure à un cinquième seuil, le procédé comprend en outre une adaptation de l'algorithme détecteur de coins par modification (124), pour au moins certains trackers sélectionnés, des paramètres de recherche du tracker et des dimensions de la zone de recherche dans l'image dans un sens restrictif.

6. Le procédé de la revendication 1, comprenant en outre, si l'algorithme sélectionné est l'algorithme détecteur de coins et si l'approximée de la vitesse est inférieure à un cinquième seuil, l'activation d'un mode autopiloté d'asservissement en position du drone.

7. Le procédé de la revendication 1, comprenant également, après basculement vers l'algorithme détecteur de coins :

   - l'obtention, à partir des données produites par l'algorithme détecteur de coins, d'au moins un paramètre de risque d'échec de l'estimation du mouvement différentiel de la scène d'une image à la suivante par l'algorithme détecteur de coins ;
   - l'obtention d'une approximée de la vitesse de translation horizontale du drone ;
   - l'application au(x)dit(s) paramètre(s) de risque d'échec et à ladite approximée de vitesse d'une seconde batterie de critères prédéterminés (106) ; et
   - si ladite seconde batterie de critères est vérifiée, basculement inverse (118) avec retour à l'algorithme à flot optique pour l'estimation du mouvement différentiel de la scène d'une image à la suivante.

8. Le procédé de la revendication 7, dans lequel ledit paramètre de risque d'échec comprend le nombre de trackers verrouillés utilisés par l'algorithme détecteur de coins.

9. Le procédé de la revendication 8, dans lequel ladite seconde batterie de critères prédéterminés pour décider le basculement inverse avec retour vers l'algorithme à flot optique comprend alternativement les conditions suivantes :

   - nombre de trackers verrouillés inférieur à un sixième seuil donné ; ou
   - estimée de la vitesse supérieure à un septième seuil donné.

10. Le procédé de la revendication 1, comprenant en outre le comptage du nombre d'images successives captées depuis le basculement d'un premier algorithme, algorithme à flot optique ou algorithme détecteur de coins, vers l'autre algorithme, et le conditionnement (102) du retour au premier algorithme à un nombre minimal d'images comptées depuis ledit basculement vers cet autre algorithme.

## Claims

1. Method of evaluating the speed of horizontal translation of a drone (10), in particular of a rotary wing drone capable of auto-piloted stationary flight, this drone comprising:

   - an altimeter (22), capable of measuring the altitude of the drone with respect to the terrain (18) flown over by that drone; and
   - a vertically-aimed video camera (16) pointing downwards and capable of capturing successive digital images of a scene of the said terrain,

   the said method comprising the estimation of the displacement of the scene captured by the camera from one image to the next, and the application to this estimated displacement of a scale factor depending on the measured altitude, the estimation of the displacement comprising:

   - the periodic and continuous updating of a multi-resolution representation of the image pyramid type, modelling at different successively decreasing resolutions a same captured image of the scene; and
   - for each new captured image, the application to the said multi-resolution representation of an iterative algorithm of the optical flow type for the estimation of the differential movement of the scene from one image to the next,

   the method being **characterized in that** it furthermore comprises:

   - the obtaining, from data produced by the optical flow algorithm (106), of at least one texture parameter representative of the level of the micro-contrasts of the captured scene and derived from the matrix:

$$\begin{bmatrix} \sum_E I_x^2 & \sum_E I_x I_y \\ \sum_E I_x I_y & \sum_E I_y^2 \end{bmatrix}$$

of the components of the gradient of the image, where $I_x$ and $I_y$ are the components of the gradient of the image and $E$ is the set of points for which the gradient has a norm greater than a first predetermined useful threshold;
- the obtaining of an approximation of the speed of horizontal translation of the drone;
- the application to the said texture parameter or parameters and to the said speed approximation of a first set of predetermined criteria (108); and
- if the said first set of criteria is verified, the switchover (110) from the optical flow algorithm to an algorithm of the corner detection type for the estimation of the differential movement of the scene from one image to the next.

2. Method according to Claim 1, **characterized in that** the said at least one texture parameter is the value of the trace of the said matrix of the components of the gradient of the image.

3. Method according to Claim 1, **characterized in that** the said at least one texture parameter is the cardinal of the said set E of the points for which the gradient has a norm greater than a first predetermined useful threshold.

4. Method according to Claims 2 and 3 taken in combination, **characterized in that** the said first set of predetermined criteria (108) for deciding on the switchover from the optical flow algorithm to the corner detection algorithm cumulatively comprises the following conditions:

   - value of the said trace greater than a second given threshold; and
   - value of the said cardinal greater than a third given threshold; and
   - estimation of the speed less than a fourth given threshold.

5. Method according to Claim 1, **characterized in that** if the selected algorithm is the corner detection algorithm and if the approximation of the speed is less than a fifth threshold, the method furthermore comprises an adaptation of the corner detection algorithm by modification (124), for at least some selected trackers, of the search parameters of the tracker and of the dimensions of the search area in the image in a restrictive sense.

6. Method according to Claim 1, furthermore comprising, if the selected algorithm is the corner detection algorithm and if the approximation of the speed is less than a fifth threshold, the activation of an auto-piloted mode for servo-controlling the position of the drone.

7. Method according to Claim 1, also comprising, after switching over to the corner detection algorithm:

   - the obtaining, from data produced by the corner detection algorithm, of at least one parameter of risk of failure of the estimation of the differential movement of the scene from one image to the next by the corner detection algorithm;
   - the obtaining of an approximation of the speed of horizontal translation of the drone;
   - the application to the said failure risk parameter or parameters, and to the said speed approximation, of a second set of predetermined criteria (106); and
   - if the said second set of criteria is verified, reverse switchover (118) with return to the optical flow algorithm for the estimation of the differential movement of the scene from one image to the next.

8. Method according to Claim 7, **characterized in that** the said risk of failure parameter comprises the number of locked trackers used by the corner detection algorithm.

9. Method according to Claim 8, **characterized in that** the said second set of predetermined parameters for deciding on the reverse switchover with return to the optical flow algorithm alternatively comprises the following conditions:

   - number of locked trackers less than a sixth given threshold; or
   - estimation of the seed greater than a seventh given threshold.

**10.** Method according to Claim 1, **characterized in that** it furthermore comprises counting the number of successive images captured since the switchover from a first algorithm, the optical flow algorithm or the corner detection algorithm, to the other algorithm, and the condition (102) for the return to the first algorithm being a minimum number of images counted since the said switchover to this other algorithm.

## Patentansprüche

**1.** Verfahren zur Ermittlung der horizontalen Translationsgeschwindigkeit einer Drohne (10), insbesondere einer Drohne mit Drehflügel, die einen stationären Autopilotflug durchführen kann, wobei diese Drohne Folgendes enthält:

- einen Höhenmesser (22), der die Höhe der Drohne bezüglich des von dieser Drohne überflogenen Geländes (18) messen kann; und
- eine Videokamera mit vertikaler Zielrichtung (16), die nach unten weist und aufeinanderfolgende digitale Bilder einer Szene des Geländes erfassen kann,

wobei das Verfahren die Schätzung der Verschiebung der von der Kamera erfassten Szene von einem Bild zum nächsten und die Anwendung eines von der gemessenen Höhe abhängigen Skalenfaktors an diese geschätzte Verschiebung enthält,
wobei die Schätzung der Verschiebung Folgendes enthält:

- die periodische und kontinuierliche Aktualisierung einer Darstellung mit Mehrfachauflösung von der Art Bilderpyramide, die bei verschiedenen nacheinander abnehmenden Auflösungen das gleiche erfasste Bild der Szene modellisiert; und
- für jedes neue erfasste Bild, die Anwendung an die Mehrfachauflösungsdarstellung eines iterativen Algorithmus von der Art optischer Fluss der Schätzung der differentiellen Bewegung der Szene von einem Bild zum anderen,

**dadurch gekennzeichnet ist, dass** das Verfahren außerdem Folgendes enthält:

- den Erhalt, ausgehend von den vom Algorithmus mit optischem Fluss (106) erzeugten Daten, mindestens eines Texturierungsparameters, der für den Pegel der Mikrokontraste der erfassten Szene repräsentativ und von der Matrix

$$\begin{bmatrix} \sum_E I_x^2 & \sum_E I_x I_y \\ \sum_E I_x I_y & \sum_E I_y^2 \end{bmatrix}$$

der Komponenten des Gradienten des Bilds abgeleitet ist, wobei $I_x$ und $I_y$ die Komponenten des Gradienten des Bilds sind, und E die Gesamtheit der Punkte ist, für die der Gradient eine Norm höher als eine erste vorbestimmte Nutzschwelle aufweist;
- den Erhalt eines Annäherungswerts der horizontalen Translationsgeschwindigkeit der Drohne;
- die Anwendung an den (die) Texturierungsparameter und an den Geschwindigkeitsannäherungswert einer ersten Reihe von vorbestimmten Kriterien (108); und
- wenn die erste Reihe von Kriterien bestätigt wird, das Wechseln (110) vom Algorithmus mit optischem Fluss zu einem Algorithmus der Art Eckendetektor für die Schätzung der differentiellen Bewegung der Szene von einem Bild zum nächsten.

**2.** Verfahren nach Anspruch 1, bei dem der mindestens eine Texturierungsparameter der Wert der Spur der Matrix der Komponenten des Gradienten des Bilds ist.

**3.** Verfahren nach Anspruch 1, bei dem mindestens ein Texturierungsparameter die Kardinalzahl der Gesamtheit E der Punkte ist, für die der Gradient eine Norm höher als eine erste vorbestimmte Nutzschwelle aufweist.

**4.** Verfahren nach den Ansprüchen 2 und 3 in Kombination, bei dem die erste Reihe von vorbestimmten Kriterien

(108), um das Wechseln vom Algorithmus mit optischem Fluss zum Eckendetektor-Algorithmus zu bestimmen, kumulativ die folgenden Bedingungen enthält:

- Wert der Spur höher als eine zweite gegebene Schwelle; und
- Wert der Kardinalzahl höher als eine dritte gegebene Schwelle; und
- Schätzwert der Geschwindigkeit niedriger als eine vierte gegebene Schwelle.

**5.** Verfahren nach Anspruch 1, bei dem, wenn der ausgewählte Algorithmus der Eckendetektor-Algorithmus ist, und wenn der Näherungswert der Geschwindigkeit niedriger als eine fünfte Schwelle ist, das Verfahren außerdem eine Anpassung des Eckendetektor-Algorithmus durch Änderung (124), für mindestens bestimmte ausgewählte Tracker, der Suchparameter des Trackers und der Abmessungen der Suchzone im Bild in einem restriktiven Sinn aufweist.

**6.** Verfahren nach Anspruch 1, das außerdem, wenn der ausgewählte Algorithmus der Eckendetektor-Algorithmus ist, und wenn der Näherungswert der Geschwindigkeit niedriger als eine fünfte Schwelle ist, die Aktivierung einer Autopilot-Betriebsweise der Positionsregelung der Drohne enthält.

**7.** Verfahren nach Anspruch 1, das außerdem nach dem Wechsel zum Eckendetektor-Algorithmus Folgendes enthält:

- den Erhalt, ausgehend von den vom Eckendetektor-Algorithmus erzeugten Daten, mindestens eines Parameters der Scheitergefahr der Schätzung der differentiellen Bewegung der Szene von einem Bild zum nächsten durch den Eckendetektor-Algorithmus;
- den Erhalt eines Näherungswerts der horizontalen Translationsgeschwindigkeit der Drohne;
- die Anwendung an den (die) Parameter der Scheitergefahr und an den Geschwindigkeitsannäherungswert einer zweiten Reihe von vorbestimmten Kriterien (106); und
- wenn die zweite Reihe von Kriterien bestätigt wird, umgekehrter Wechsel (118) mit Rückkehr zum Algorithmus mit optischem Fluss für die Schätzung der differentiellen Bewegung der Szene von einem Bild zum nächsten.

**8.** Verfahren nach Anspruch 7, bei dem der Parameter der Scheitergefahr die Anzahl von gesperrten Trackern enthält, die vom Eckendetektor-Algorithmus verwendet werden.

**9.** Verfahren nach Anspruch 8, bei dem die zweite Reihe von vorbestimmten Kriterien, um das umgekehrte Wechseln zum Algorithmus mit optischem Fluss zu bestimmen, alternativ die folgenden Bedingungen enthält:

- Anzahl von gesperrten Trackern niedriger als eine sechste gegebene Schwelle; oder
- Schätzwert der Geschwindigkeit höher als eine siebte gegebene Schwelle.

**10.** Verfahren nach Anspruch 1, das außerdem das Zählen der Anzahl von aufeinanderfolgenden Bildern, die seit dem Wechsel von einem ersten Algorithmus, Algorithmus mit optischem Fluss oder Eckendetektor-Algorithmus, zum anderen Algorithmus erfasst wurden, und das Bedingen (102) der Rückkehr zum ersten Algorithmus bei einer Mindestanzahl von Bildern, gezählt seit dem Wechsel zu diesem anderen Algorithmus, enthält.

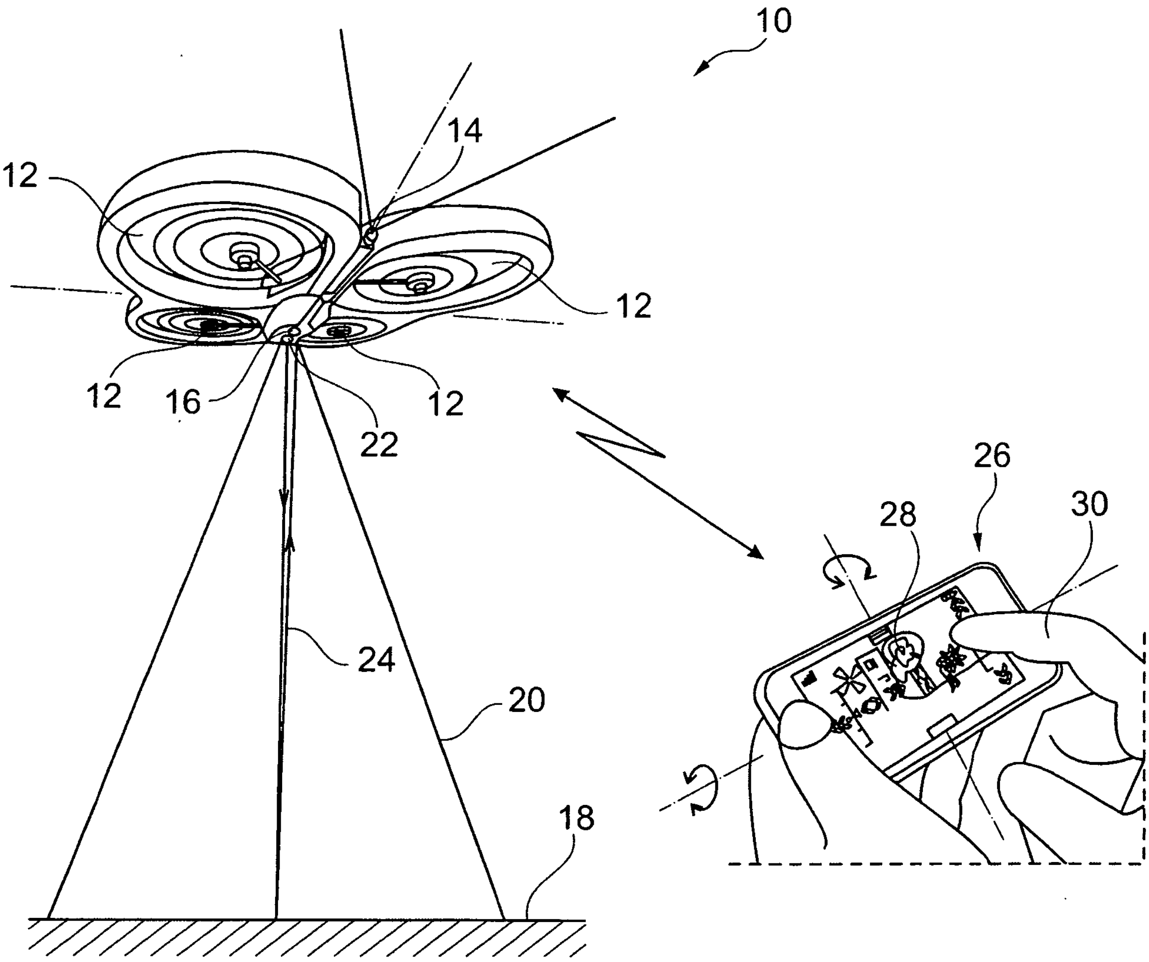
10
14
12
12
12
16
12
22
26
28
30
24
20
18

Fig. 1

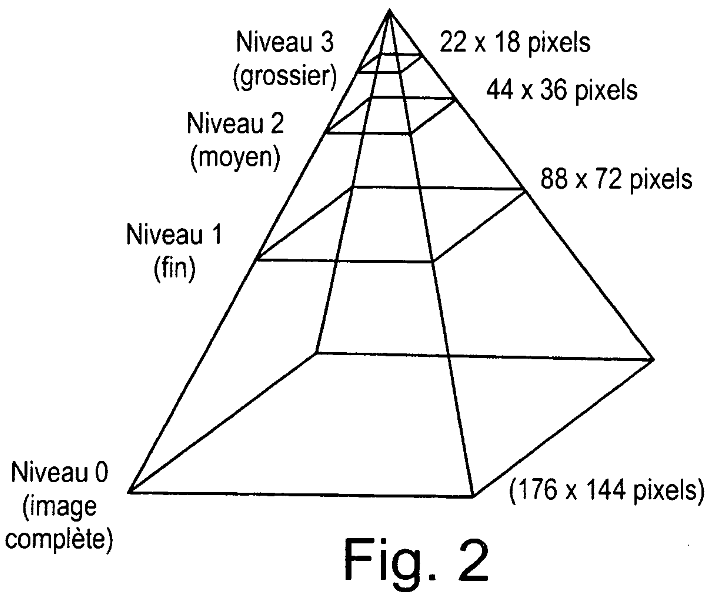
Niveau 3
(grossier)
22 x 18 pixels
44 x 36 pixels
Niveau 2
(moyen)
88 x 72 pixels
Niveau 1
(fin)
Niveau 0
(image
complète)
(176 x 144 pixels)

Fig. 2

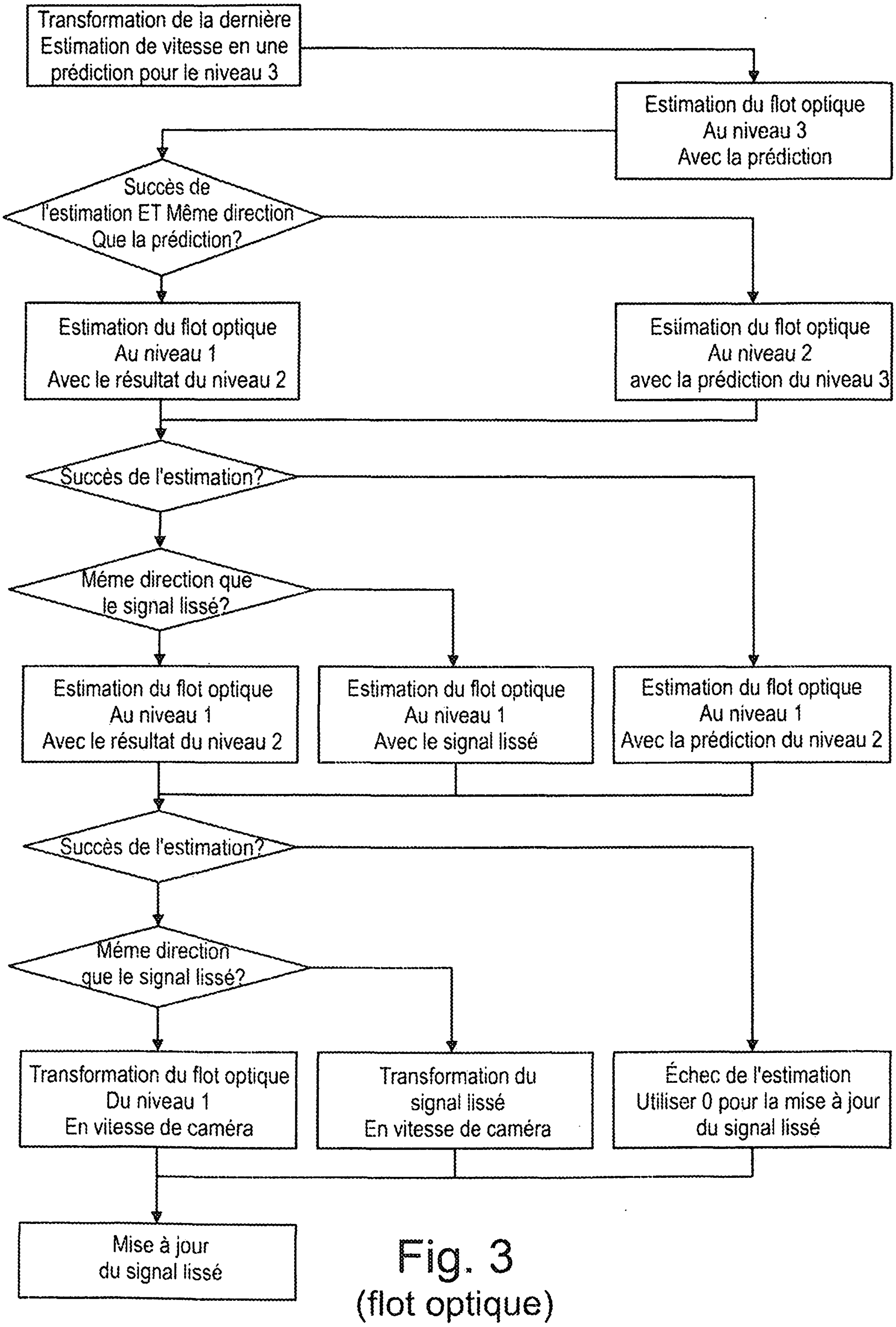


Fig. 3
(flot optique)

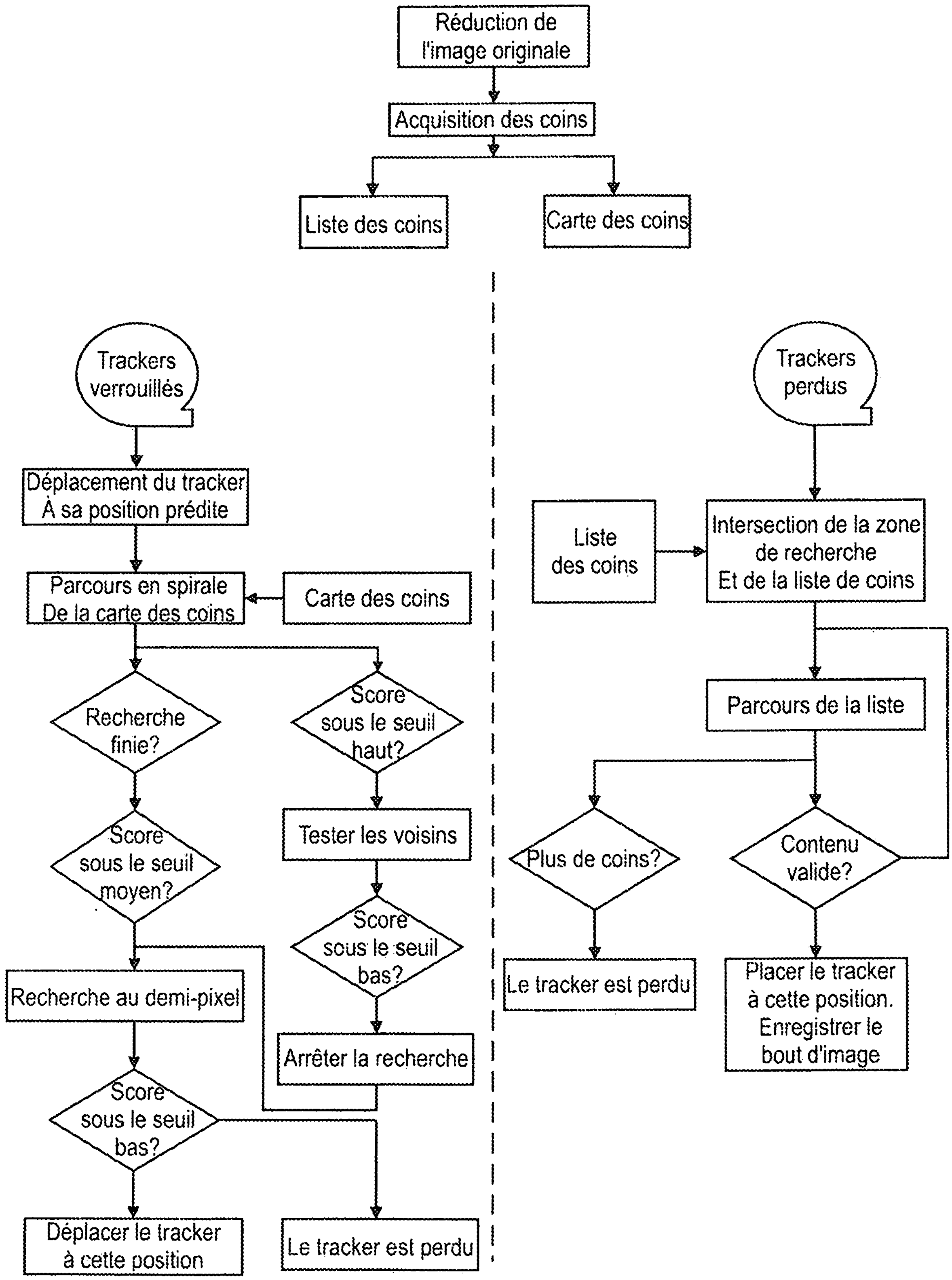


Fig. 4
(Détecteur de coins)

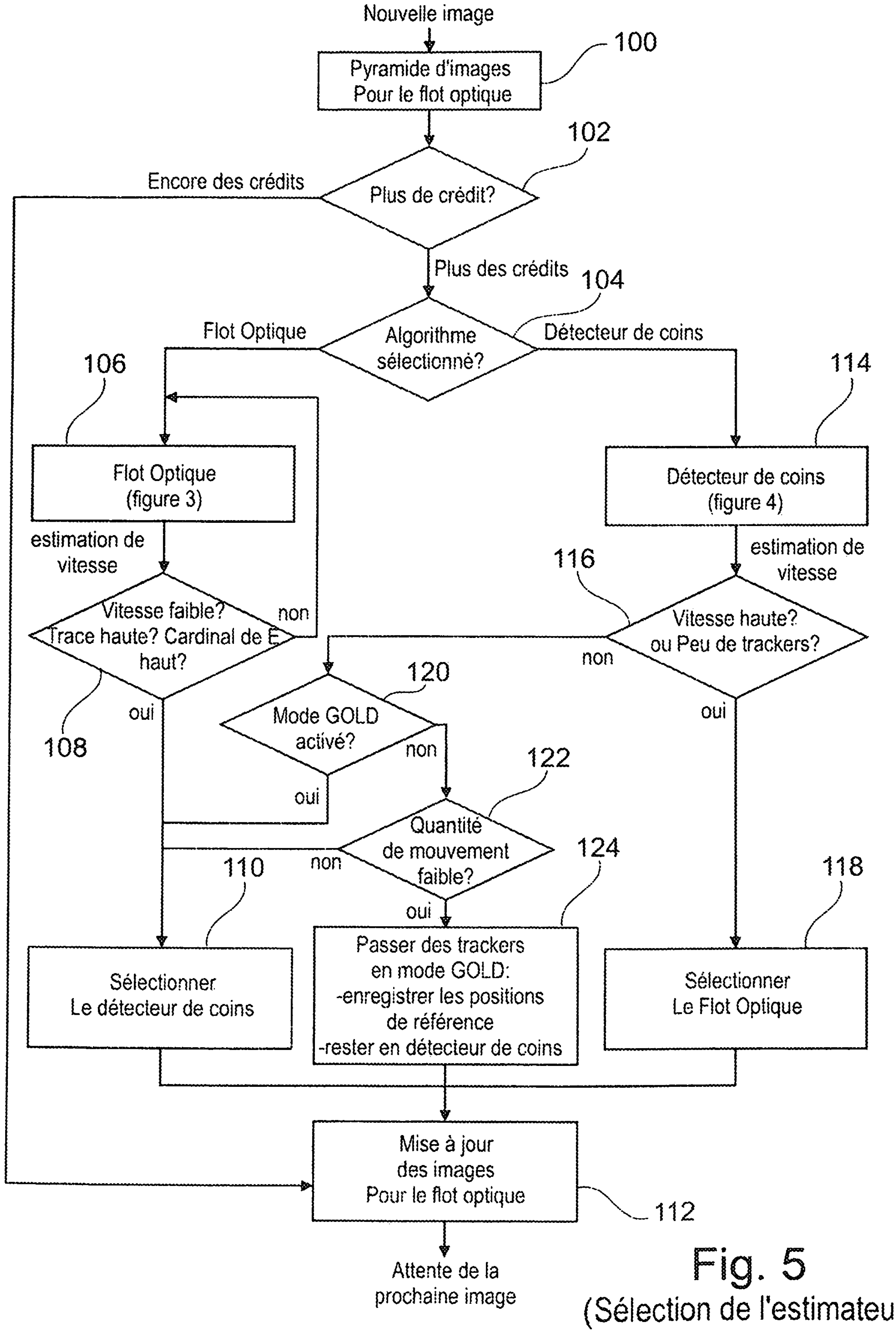


Fig. 5
(Sélection de l'estimateur)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2009109711 A2, Parrot


### Littérature non-brevet citée dans la description


- **LUCAS B.D. ; KANADE T.** An Iterative Image Registration Technique with an Application to Stereo Vision. *Proc. DARPA Image Un-derstanding Workshop,* 1981, 121-130
- **HORN B.K.P. ; SCHUNK B.** Determining Optical Flow. *Artificial Intelligence,* 1981, 185-204
- **MONDRAGÓN I. et al.** 3D Pose Estimation Based on Planar Object Tracking for UAVs Control. *Proc. IEEE Conf. on Robotics and Automation,* 03 Mai 2010, 35-41
- **ROSTEN E. ; DRUMMOND T.** Fusing Points and Lines for High Performance Tracking. *IEEE International Conference on Computer Vision,* 2005, 1508-1511
- **ROSTEN E. ; DRUMMOND T.** Machine Learning for High-Speed Corner Detection. *European Conference on Computer Vision,* 2006, 430-443